# FASCICULE DE BREVET EUROPEEN

(11) **EP 0 458 235 B1**
(45) Date de publication et mention de la délivrance du brevet: **30.08.1995**
(21) Numéro de dépôt: 91108127.1
(22) Date de dépôt: 21.05.1991
(51) Int. Cl.: H04L 12/56

(54) **Réseau de commutation à trajets multiples et à auto-acheminement pour la commutation de cellules à multiplexage temporel asynchrone avec signalisation de disponibilité**
Mehrweg- und Selbstlenkungsvermittlungsnetz zur Vermittlung von asynchronen Zeitmultiplexeinheiten mit Verfügbarkeitszeichen
Self routing ATM multiple path switching network with availability signalling

(30) Priorité: 22.05.1990 FR 9006405
(43) Date de publication de la demande: 27.11.1991
(73) Titulaire: ALCATEL N.V., NL-1077 XX Amsterdam (NL)
(72) Inventeur: Henrion, Michel André, c/o ALCATEL COORDINATION, B-1930 Zaventem (BE); Verhille, Henri, B-2960 Brecht (BE)
(74) Mandataire: Weinmiller, Jürgen

(56) Documents cités:
- EP-A- 0 224 229
- EP-A- 0 234 191
- WO-A-85/02737
- WO-A-87/00374
- WO-A-89/07298

## Description

La présente invention concerne un réseau de commutation à trajets multiples et à auto-acheminement pour la commutation de cellules à multiplexage temporel asynchrone avec signalisation de disponibilité.

Un réseau de commutation, dans sa définition structurelle la plus large comprend des ports d'entrée auxquels sont connectées des liaisons d'entrée, des ports de sortie auxquels sont connectées des liaisons de sortie, des commutateur élémentaires disposés entre ces ports d'entrée et ces ports de sortie, arrangés en un ou plusieurs étages et interconnectés par des mailles. Les ports d'entrée du réseau de commutation sont associés aux entrées de commutateurs élémentaires d'un premier étage, tandis que les ports de sortie sont associés aux sorties de commutateur élémentaires d'un dernier étage. Les sorties des commutateurs élémentaires dudit premier étage sont couplées par des mailles, éventuellement au moyen d'étages intermédiaires de commutateurs élémentaires, aux entrées des commutateurs élémentaires dudit dernier étage. Les mailles, d'une manière générale, comprennent une ou plusieurs liaisons autonomes, connectant chacune une sortie d'un commutateur à une entrée d'une autre commutateur, ou du même.

Un tel réseau de commutation est dit à trajets multiples lorsqu'il offre plus d'un trajet de commutation entre un port d'entrée et un port de sortie quelconques. Dans ce cas, la désignation d'un port d'entrée et d'un port de sortie n'est pas suffisante pour déterminer un trajet allant de l'un à l'autre. Il reste encore un choix à effectuer entre les multiples trajets qu'offre le réseau de commutation entre ce port d'entrée et ce port de sortie.

Un tel réseau est encore dit à auto-acheminement, au sens large du terme, lorsqu'il est tel que la détermination d'un trajet de commutation se fait, dans le réseau de commutation, non seulement à l'aide d'une information d'acheminement contenant la désignation implicite ou explicite d'un port d'entrée et celle d'un port de sortie du réseau de commutation, mais aussi par une décision d'acheminement propre au réseau de commutation.

La faculté d'auto-acheminement introduite dans le réseau de commutation fournit ainsi un moyen autonome pour résoudre le problème d'acheminement que posent les réseaux à trajets multiples, lorsque l'acheminement est seulement défini par la désignation d'un port d'entrée et d'un port de sortie.

Des réseaux de commutation à trajets multiples et à auto-acheminement par connexion sont bien connus dans la commutation de circuits ou la commutation de voies à multiplexage temporel synchrone. Le processus d'acheminement ou d'établissement de connexion y est accompli une fois, au début d'une communication, et détermine un trajet de commutation dont les éléments, initialement libres, sont ensuite occupés par la communication, et deviennent donc indisponibles pour les autres communications. Les trajets de commutation établis causent donc un risque de blocage par manque de voies dans la recherche de tout nouveau trajet de commutation. Le processus d'acheminement appliqué dans ces réseaux de commutation connus embrasse généralement l'ensemble ou une partie importante du réseau de commutation. Un principe connu est basé sur l'acheminement d'une demande de communication à travers les commutateurs élémentaires du réseau de commutation, réservant un trajet de commutation du port d'entrée à un port de sortie désiré. Si l'acheminement de la demande de communication aboutit à un cul-de-sac, dans un commutateur élémentaire n'ayant aucune sortie disponible conduisant en direction du port de sortie désiré, un signal d'indisponibilité est transmis en arrière par ce dernier commutateur élémentaire et l'acheminement de la demande de communication est repris en amont, par un autre trajet, ce mécanisme étant éventuellement répété jusqu'à ce que le port de sortie désiré soit atteint. Ce processus d'acheminement complexe requiert un laps de temps important, en terme d'opérations élémentaires de commande pour établir la connexion, mais relativement court, comparé à la durée de la communication, et n'est donc pas préjudiciable, en ce qui concerne l'efficacité de communication du réseau de commutation.

Avec un tel processus, la défaillance d'un commutateur élémentaire, assimilée à une indisponibilité, est automatiquement palliée par réaiguillage des demandes de communication à partir du commutateur indisponible, de sorte qu'il n'y a aucune perte d'appels au moment de leur établissement ; par contre, les appels établis à travers un commutateur élémentaire défaillant sont perturbés ou interrompus.

Les cellules, aussi appelées paquets, sont des unités d'information numérique comprenant notamment une étiquette contenant une information permettant d'identifier la destination de la cellule, ainsi que des données de communication.

Les cellules sont soit de longueur fixe, soit de longueur variable. Dans le dernier cas, la cellule est transférée sous forme d'une séquence ininterrompue d'un certain nombre de sous-cellules de longueur fixe de taille relativement petite, ce qui permet d'optimiser le transfert interne, le stockage en mémoire ou dans les registres, et les fonctions de traitement au niveau des sous-cellules.

Dans un système de transmission de cellules à multiplexage temporel asynchrone, les cellules de plusieurs communications, transmises sur une même liaison, se suivent dans un ordre quelconque et des cellules relatives à une même communication sont transmises à intervalles irréguliers.

Compte tenu des caractéristiques de la transmission de cellules à multiplexage temporel asynchrone, un réseau de commutation de cellules à multiplexage temporel asynchrone est généralement un réseau de commutation agencé pour commuter individuellement de telles cellules, de telle sorte qu'un trajet de commutation soit recherché pour chacune d'elles, pour l'acheminer d'un port d'entrée du réseau jusqu'à un port de sortie au moins. Un tel réseau de commutation, s'il est également du type à auto-acheminement, est alors dit "à auto-acheminement par cellule".

Le processus d'établissement préalable de connexion que l'on vient d'évoquer pour les réseaux de commutation de circuits ou de voies à multiplexage temporel synchrone, bien qu'il soit en principe également applicable à la commutation de cellules à multiplexage temporel asynchrone, n'est alors pas appliqué car il présenterait un certain nombre d'inconvénients, tels que la complexité de la gestion des débits des connexions établies sur chaque maille interne du réseau et un laps de temps trop important pour établir des connexions de données.

La technique s'est donc tournée, pour la commutation de cellules à multiplexage temporel asynchrone, vers des réseaux de commutation spécifiques dans lesquels le processus de commutation y compris la recherche de trajet a lieu étage par étage pour chaque cellule individuelle, sans établissement et marquage préalable de connexion, de port d'accès à port de sortie, au début de la communication.

On trouvera la description d'un exemple de réseau de commutation de ce type dans l'article "Design of a Broadcast Packet Network", de J.S. Turner, publié dans les "Proceedings of IEEE INFOCOM'86", Fifth Annual Conference, "Computers and Communications Integration Design, Analysis, Management", pages 668 à 673.

Un tel réseau comprend, de ports d'entrée à ports de sortie, des étages spécialisés dans la multiplication de cellules nécessaire pour les communications de point a multipoint, des étages spécialisés dans le brassage des cellules, pour mélanger les cellules provenant des différentes entrées et obtenir des débits moyens par maille égaux et stables, autant qu'il est statistiquement possible, et des étages spécialisés dans l'acheminement sélectif vers les ports de sortie. Ce réseau est construit à l'aide de commutateurs élémentaires à deux entrées et deux sorties seulement. Une petite mémoire tampon pour deux cellules est prévue à chaque entrée du commutateur élémentaire. Lorsqu'une cellule doit emprunter une sortie qui n'est pas disponible, parce qu'une autre cellule est alors retransmise sur cette sortie, l'entrée peut conserver temporairement la cellule non retransmise. Le document de brevet WO 85/02737 décrit le même type de réseau et précise en outre que chaque sortie devant acheminer une cellule donne lieu à une demande d'accès et à un accord en réponse si elle est disponible, procédure limitée et coûteuse en temps. Dans un cas, comme dans l'autre, il n'est pas prévu de faire face à l'indisponibilité du commutateur élémentaire, ni à sa défaillance, bien que, en raison du mélange de cellules évoqué plus haut, l'indisponibilité d'un commutateur élémentaire affecte un grand nombre de communications.

Par ailleurs, la demande de brevet FR-9003246 contient une description d'un réseau de commutation à trajets multiples et à auto-acheminement par cellules, pour la commutation de cellules à multiplexage temporel asynchrone se caractérisant en ce que chaque commutateur d'un étage au moins du réseau possède au moins trois sorties, ces sorties étant arrangées en groupes de sorties dits groupes d'acheminement comprenant une ou plusieurs sorties déterminées, et en ce que, en fonction d'informations d'acheminement associées à une cellule de longueur fixe ou variable reçue sur l'une quelconque de ses entrées, le commutateur est agencé pour identifier un ensemble comprenant un ou plusieurs desdits groupes de sorties, une copie de la cellule étant transférée vers chacun des groupes de sorties identifiés et pour transférer ladite cellule reçue, sur une sortie sélectionnée parmi les sorties du ou de chacun des groupes dudit ensemble.

De même que dans le cas de réseau de commutation précédemment décrit, aucune mesure n'est décrite pour faire face à l'indisponibilité ou la défaillance d'un commutateur élémentaire, alors que cela risque d'affecter un grand nombre de communications.

Les dispositions prévues dans les réseaux de commutation de circuits, telles que décrites précédemment, ne sont pas transposables aux réseaux de commutation à trajets multiples et à auto-acheminement par cellules, pour la commutation de cellules à multiplexage temporel asynchrone, pour des raisons de complexité dans la gestion du processus de ré-aiguillage de cellule en cas d'indisponilité et de durée de ce processus.

La présente invention apporte une solution à ce problème permettant de faire en sorte qu'aucune cellule ne soit acheminée vers un commutateur élémentaire indisponible ou défaillant et donc ne puisse pas atteindre le port de sortie désiré.

L'invention est relative à un réseau de commutation à auto-acheminement par cellules et trajets multiples pour la commutation de cellules à multiplexage temporel asynchrone comprenant :
- des ports d'entrée,
- des ports de sortie,
- des commutateurs élémentaires arrangés en plusieurs étages de commutateurs élémentaires interconnectés,
- chaque commutateur élémentaire ayant des entrées et des sorties et étant agencé pour transférer une cellule reçue sur l'une de ses entrées, sur une ou plusieurs de ses sorties, en fonction d'informations d'acheminement associées à ladite cellule,
- les ports d'entrée du réseau correspondant aux entrées des commutateurs élémentaires d'un premier étage et les ports de sortie du réseau correspondant aux sorties des commutateurs élémentaires d'un dernier étage, ce réseau étant par ailleurs tel que
- chaque commutateur élémentaire d'un étage au moins du réseau possède au moins trois sorties,
- ces sorties sont arrangées en groupes de sorties,
- un groupe de sorties comprend une ou plusieurs sorties déterminées,
- en fonction de données d'acheminement associées à une cellule reçue sur l'une quelconque de ses entrées, le commutateur élémentaire est agencé pour identifier un ensemble comprenant un ou plusieurs desdits groupes de sorties,
- le commutateur élémentaire est agencé pour transférer ladite cellule reçue, sur une sortie, sélectionnée parmi les sorties du groupe unique dudit ensemble, ou des sorties, une par groupe dudit ensemble, chacune sélectionnée parmi les sorties du groupe auquel elle appartient.

Le réseau de commutation de l'invention est caractérisé en ce que
- chaque commutateur élémentaire d'un étage au moins, dit étage considéré, du réseau de commutation comprend des moyens d'établissement d'état définissant un état de disponibilité du commutateur élémentaire dans lequel ce commutateur élémentaire est disponible pour l'acheminement du trafic de cellules,
- chaque commutateur élémentaire dudit étage considéré comprend des moyens de transmission d'état associés aux liaisons entrantes connectant ce commutateur élémentaire à des commutateurs élémentaires de l'étage précédent et transmettant une information d'état de disponibilité à ces commutateurs élémentaires lorsque le commutateur élémentaire considéré est dans ledit état de disponibilité,
- chaque commutateur élémentaire dudit étage précédent comprend des moyens de réception d'informations d'état associés aux liaisons sortantes connectant ce commutateur élémentaire à des commutateurs élémentaires dudit étage considéré et recevant une information d'état de disponibilité pour chacune de ses sorties, lorsque celle-ci conduit à un commutateur élémentaire dans ledit état de disponibilité, et
- chacun des commutateurs dudit étage précédent comprend des moyens de défense intervenant dans les décisions d'acheminement des cellules en interdisant leur accès à toute sortie dont la liaison sortante ne donne pas lieu à la réception d'une information d'état indiquant la disponibilité.

Ainsi, chaque commutateur dudit étage précédent est informé de l'état des commutateurs élémentaires dudit étage considéré auxquels il est connecté par une information d'état de disponibilité associée à chacune de ses sorties. Dès que l'information d'état associée à une sortie cesse d'indiquer la disponibilité, le commutateur cesse l'envoi de cellules sur cette sortie. L'acheminement des cellules est modifié en conséquence et, compte tenu de ce qu'il s'agit d'un réseau de commutation à trajets multiples et à auto-acheminement par cellules, il en résulte alors un contournement du point défectueux qui dès lors n'affecte pas le transfert des cellules dans le réseau de commutation.

Selon une autre caractéristique de l'invention, lesdits moyens de transmission d'état permettent une transmission permanente ou quasi-permanente d'un signal représentant ladite information d'état de disponibilité.

La mise en place du contournement évoqué plus haut est ainsi quasi-immédiate, de sorte que l'apparition d'un défaut n'a que des conséquences fugitives sur les communications établies.

Selon une autre caractéristique de l'invention, après interdiction de l'acheminement de cellules vers un commutateur élémentaire dudit étage considéré, l'acheminement des cellules vers ce commutateur élémentaire reprend dès que l'information d'état qu'il fournit indique qu'il est redevenu disponible.

Selon une autre caractéristique de l'invention, l'établissement de l'état d'un commutateur élémentaire dudit étage précédent par lesdits moyens d'état s'effectue en prenant en considération, outre l'état opératoire du commutateur élémentaire lui-même, les informations d'état qu'il reçoit de commutateurs élémentaires dudit étage considéré, évaluées par groupes de sorties, au moyen d'un circuit de supervision de disponibilité de groupe de sorties, qui vérifie si la capacité d'acheminement de chaque groupe de sorties est suffisante par rapport à un seuil de capacité d'acheminement.

Selon une autre caractéristique de l'invention, ledit seuil est ajustable par commande externe au commutateur élémentaire.

Selon une autre caractéristique de l'invention, ledit seuil spécifie pour chaque groupe'de sorties un nombre minimal de sorties disponibles.

Selon une autre caractéristique de l'invention, la composition des groupes de sorties est fournie audit circuit de disponibilité de groupe de sorties par une commande externe.

Les dispositions qui précèdent permettent de fournir une réponse souple aux informations d'état reçues, au niveau d'un commutateur élémentaire, quelle que soit la configuration du réseau de commutation dans lequel il s'insère. Un commutateur élémentaire ne se déclare indisponible que lorsqu'il ne dispose plus d'une capacité d'acheminement de cellules suffisante dans l'un de ses groupes de sorties, en fonction de paramètres modifiables à tout moment.

Selon une autre caractéristique de l'invention, lesdits moyens de transmission d'état associés aux liaisons entrantes comprennent une liaison de transmission d'état individuelle par liaison entrante.

Selon une autre caractéristique de l'invention, lesdits moyens de transmission d'état associés aux liaisons entrantes comprennent une liaison de transmission d'état individuelle par groupes de liaisons entrantes appartenant à la même maille.

De la sorte la sécurité de la transmission de l'information d'état est respectivement établie au niveau de chaque liaison individuelle, ou de chaque groupe de liaisons entrantes appartenant à la même maille.

Selon une autre caractéristique de l'invention, chaque commutateur élémentaire dudit étage considéré combine l'information d'état de fonctionnement de chaque liaison entrante (ou groupe de liaisons entrantes appartenant à une même maille) avec l'état de disponibilité du commutateur élémentaire considéré, afin de transmettre sur ladite liaison de transmission d'état individuelle une information d'autorisation de transfert de cellules sur la liaison considérée lorsque celle-ci est en état de fonctionnement et que le commutateur élémentaire considéré est disponible.

On arrive ainsi à ce que l'information d'autorisation de transfert de cellules résulte non seulement de l'état de bon fonctionnement d'un commutateur élémentaire dudit étage considéré, mais aussi de celui de la liaison (ou du groupe de liaisons entrantes appartenant à une même maille) qui y conduit, à partir d'un commutateur élémentaire dudit étage précédent. Cette information étant de plus transmise par des moyens de transmission associés individuellement à la liaison (ou au groupe de liaisons), il est aisé de faire en sorte que, dans le commutateur élémentaire de l'étage précédent, en toute sécurité, il ne soit conclu à la disponibilité de la liaison sortante (ou du groupe de liaisons sortantes) que si elle est bien en mesure d'acheminer des cellules.

Selon une autre caractéristique de l'invention, lorsque le transfert de cellules n'est pas autorisé, ladite information d'état peut fournir d'autres états que l'état de non disponibilité, et alors transporter, par exemple, des informations de test ou de commande.

Selon une variante, une autre caractéristique de l'invention réside en ce que lesdits moyens de transmission d'état associés aux liaisons entrantes comprennent une liaison de transmission numérique spécifique, prévue à cet effet.

Selon une autre variante, une autre caractéristique de l'invention réside en ce que, dans le cas où le réseau de commutation est symétrique et où deux commutateurs d'étages adjacents sont raccordés par deux liaisons symétriques, une pour chaque direction de transfert de cellules, lesdits moyens de transmission d'état associés aux liaisons entrantes comprennent la transmission d'information d'état dans des cellules acheminées sur les liaisons symétriques de celles-ci.

Selon une autre caractéristique de l'invention, une partie au moins des commutateurs élémentaires sont des modules de commutation réalisés à l'aide de petits commutateurs élémentaires de telle sorte qu'ils constituent un ensemble équivalent à un commutateur élémentaire de plus grosse capacité, en ce que lesdits groupes de sortie sont définis comme des groupes d'acheminement du module de commutation et en ce que les moyens utilisés pour le traitement desdites informations d'état sont centralisés au niveau du module de commutation pour recevoir et transmettre lesdites informations d'état appropriées de et vers les étages adjacents.

Les différents objets et caractéristiques de l'invention seront exposés de façon plus détaillée dans le cours de la description qui va suivre d'un exemple de réalisation de l'invention, fournie à titre non limitatif, en se reportant aux figures annexées qui représentent :
- la figure 1, le diagramme général d'une partie de réseau de commutation illustrant la transmission des informations d'états conformément à l'invention,
- la figure 2, le diagramme général d'un dispositif inclus, selon l'invention, dans un commutateur élémentaire pour l'établissement et la transmission de l'information d'état,
- la figure 3, un mode de réalisation plus détaillé de certaines parties du dispositif de la figure 2,
- la figure 4, un chronogramme illustrant l'ordre dans lequel sont accomplies les opérations dans le mode de réalisation de la figure 3.

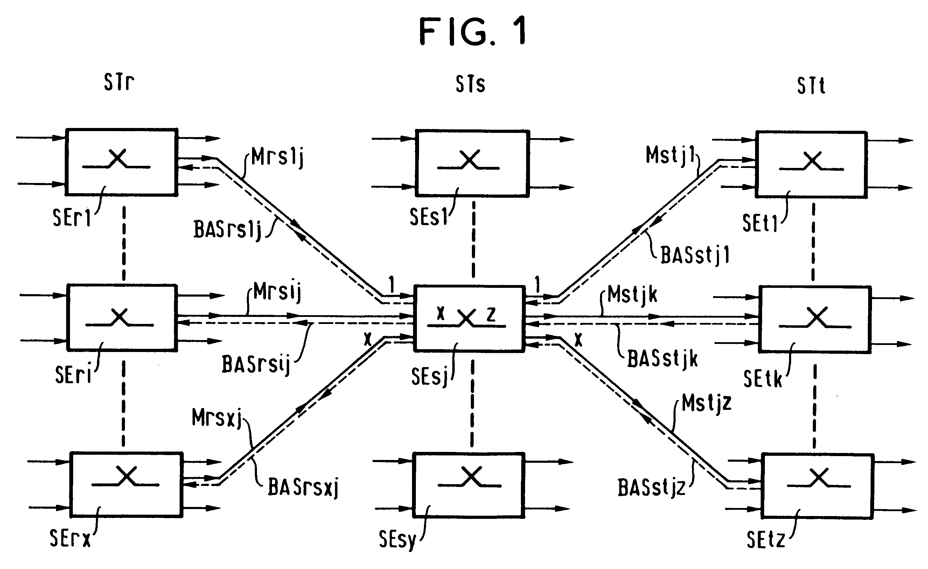

Le diagramme de la figure 1 représente, très schématiquement, une partie d'un réseau de commutation de configuration quelconque. Ce réseau de commutation est unidirectionnel ; l'invention s'appliquerait tout aussi bien dans un réseau birectionnel. Ce réseau peut comprendre d'autres étages, en amont ou en aval.

Le réseau partiel de la figure 1 comprend trois étages STr, STs et STt. Chaque étage comprend un certain nombre de commutateurs élémentaires : SEr1...,SEri...SErx pour l'étage STr, SEs1..., SEsj..., SEsy pour l'étage STs et SEt1..., SEtk..., SEtz pour l'étage STt.

Chaque commutateur élémentaire d'un étage possède des entrées et des sorties. Il achemine les cellules reçues sur ses entrées sur une ou plusieurs de ses sorties, comme cela a été exposé dans le préambule de la présente description. Cela est illustré en ce qui concerne le commutateur élémentaire SEsj, en particulier ; il en va de même pour les autres commutateurs élémentaires.

De tels commutateurs élémentaires sont soit des éléments unitaires, soit des modules de commutation composés d'un ensemble de commutateurs élémentaires de base combinés pour réaliser un commutateur élémentaire virtuel de plus grosse capacité que les commutateurs élémentaires de base.

Tel qu'illustré, et sans que cela doive être considéré comme une limitation, le commutateur élémentaire SEsj est ainsi une sorte de matrice de commutation ayant x entrées, auxquelles sont individuellement connectées x mailles d'entrée Mrs1j..., Mrsij..., Mrsxj, tracées en traits pleins, par lesquelles ce commutateur élémentaire est connecté à chacun des commutateurs élémentaires de l'étage STr. Une maille peut comprendre plusieurs liaisons individuelles indépendantes. Dans ce cas, à chacune d'elles correspond plusieurs entrées individuelles du commutateur élémentaire SEsj. Ce commutateur élémentaire possède aussi z sorties auxquelles sont individuellement connectées z mailles de sortie Mstj1..., Mstjk..., Mstjz, tracées en traits pleins, par lesquelles ce commutateur élémentaire est connecté à chacun des commutateurs élémentaires de l'étage STt. Une maille peut également comprendre plusieurs liaisons individuelles indépendantes.

Les sorties d'un commutateur élémentaire connectées à une ou plusieurs mailles peuvent constituer un groupe de sorties. Une cellule reçue sur une entrée quelconque, Mrs1j, par exemple, est ainsi acheminée sur une des sorties du groupe sélectionné, par exemple une liaison de la maille Mstj1.

L'invention considère le problème que pose dans un tel réseau de commutation l'indisponibilité d'un commutateur élémentaire quelconque, du commutateur élémentaire SEsj par exemple.

Cette indisponibilité peut résulter du fait que ce commutateur élémentaire n'est plus en mesure d'acheminer dans des conditions satisfaisantes les cellules sur l'un de ses groupes de sorties, constitué, par exemple, de la seule maille Mstj1. Etant donné que, dans le mode de commutation de cellules à multiplexage temporel asynchrone dit à auto-acheminement par cellule, l'acheminement de chaque cellule s'effectue étage par étage, c'est seulement au moment où une cellule est parvenue dans le commutateur SEsj que sa destination est connue. Si, justement, cette cellule demande à être acheminée sur le groupe de sorties réputé inaccessible, le commutateur élémentaire SEsj ne peut l'acheminer dans des conditions satisfaisantes. Ce dernier doit donc être considéré comme indisponible à l'égard de cette cellule. Mais, comme la destination des autres cellules n'est pas connue avant qu'elles soient parvenues dans le commutateur élémentaire, l'invention prévoit aussi que le commutateur élémentaire soit indisponible à leur égard ; il est donc alors indisponible à l'égard de toute cellule et pour toutes ses entrées.

Cette indisponibilité peut encore résulter du fait que le commutateur élémentaire, par suite d'une défaillance quelconque, détectée par des moyens classiques, est incapable ou réputé incapable d'acheminer les cellules entrantes.

Quelle qu'en soit la cause, l'indisponibilité globale du commutateur élémentaire est signalée par l'arrêt de l'envoi d'une information d'état de disponibilité vers chacun des commutateurs élémentaires auxquels ses entrées sont connectées, ce qui est illustré sur la figure 1, par des liaisons de transmission d'état BASrs1j..., BASrsij..., BASrsxj, tracées en traits interrompus.

En fait, ladite indisponibilité pouvant résulter du fait que le commutateur élémentaire SEsj n'est plus en mesure d'acheminer dans des conditions satisfaisantes les cellules sur l'un de ses groupes de sorties, est détectée dans le commutateur élémentaire SEsj, selon l'invention, en raison de l'absence de réception d'une ou plusieurs informations d'état de disponibilité, transmises normalement, tout comme celles que transmet le commutateur élémentaire SEsj, par les commutateurs élémentaires SEt1..., SEtk..., SETz sur les liaisons de transmission d'état BASstj1..., BASstjk..., BASstjz.

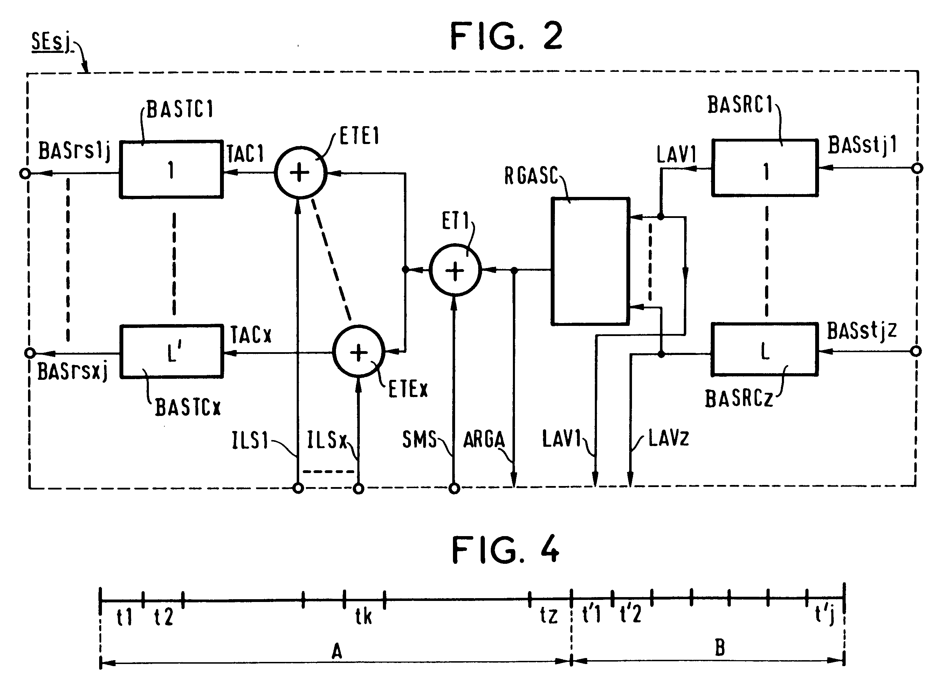

On reviendra sur l'établissement et la transmission d'informations d'état dans le commutateur élémentaire SEsj dans les descriptions qui vont suivre et, en particulier, dans celle qui concerne la figure 2.

La figure 2, en effet, représente à titre d'exemple, les circuits qui, dans le commutateur élémentaire SEsj, collectent les informations d'état entrantes BASstj1..., BASstjk..., BASstjz, une information d'état actif SMS du commutateur élémentaire et des informations individuelles d'état actif de liaisons ou mailles entrantes ILS1..., ILSx pour produire chaque information d'autorisation de transfert de cellules transmise sur chaque liaison de transmission d'état BASrs1j..., BASrsij..., BASrsxj.

En aval, les informations d'autorisation de transfert de cellules sont reçues par des récepteurs appropriées BASRC1..., BASRCz, lesquels fournissent en échange des signaux d'états entrants LAV1..., LAVz. Le mode de transmission des informations d'autorisation de transfert de cellule ne sera pas décrit. Il peut consister tout simplement en la transmission d'un état numérique transmis sur une liaison prévue à cet effet, associée individuellement à chaque liaison sortante. Alternativement, dans le cas d'un réseau de commutation symétrique (c'est-à-dire dans lequel deux commutateurs élémentaires d'étages adjacents sont interconnectés par deux mailles symétriques, une pour chaque sens de transmission), l'information d'état relative à une liaison ou maille entrante provenant d'un commutateur élémentaire d'étage adjacent peut être transmise sur une liaison sortante (symétrique de la liaison entrante) vers ce même commutateur élémentaire d'étage adjacent ; en se rapportant à la figure 1, il suffit de supposer dans ce cas que les liaisons tracées en traits interrompus représentent alors des liaisons symétriques normalement utilisées pour transférer des cellules dans la direction opposée à travers les étages successifs STt, STs et STr.

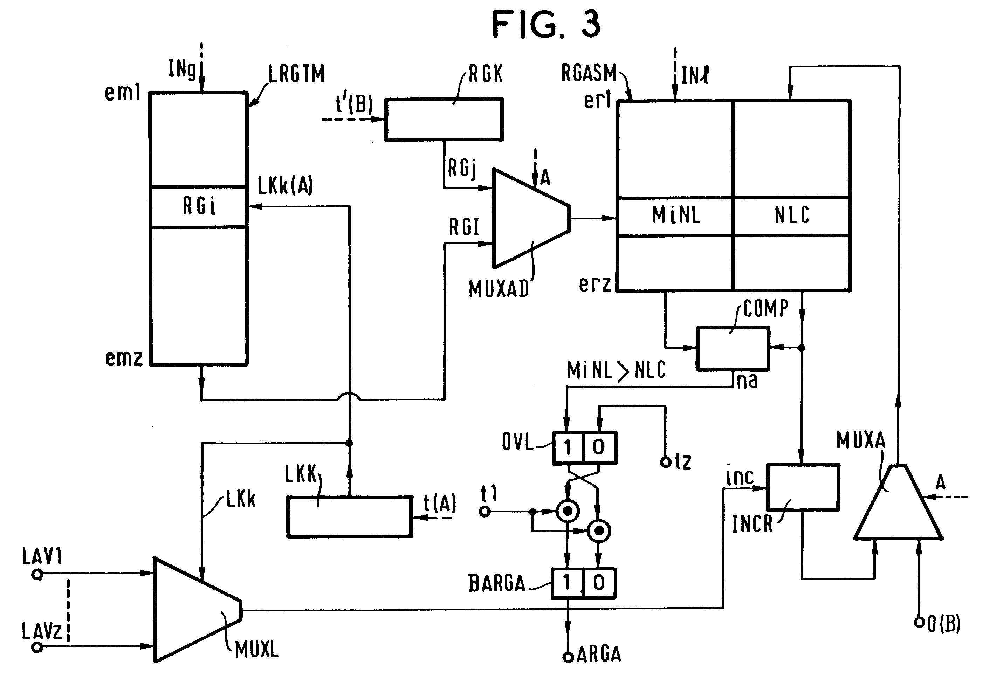

Un dispositif logique de supervision de capacité d'acheminement RGASC collecte ces informations d'état entrantes et fournit un signal de disponibilité des groupes de sorties ARGA si, selon des critères dont une description particulière sera donnée en se référant à la figure 3, les groupes de sorties doivent être considérés comme disponibles vis-à-vis du trafic de cellules entrant.

Dans une porte ET ET1, cette information est combinée avec l'information d'état actif SMS et vient valider les portes ET ETE1 à ETEx, si, tout à la fois, le commutateur élémentaire est en état normal de fonctionnement, ce qui est caractérisé par la présence du signal SMS, issu de circuits de contrôle du fonctionnement du commutateur élémentaire qui ne seront pas décrits, comme appartenant à la pratique courante en la matière, et si tous les groupes de sorties sont considérés comme disponibles.

Chacune des portes ETE1 à ETEx reçoit par ailleurs l'un des signaux ILS1 à ILSx qui caractérisent individuellement le bon état de fonctionnement des liaisons entrantes du commutateur élémentaire. Tout comme pour le signal SMS, on ne décrira pas l'obtention de ces signaux. Ces portes ETE1 à ETEx fournissent ainsi des signaux TAC1 à TACx dont chacun d'eux, relativement à l'une des liaisons entrantes, indique tout à la fois que le commutateur élémentaire est en état de fonctionnement, que les groupes de sorties du commutateur sont considérés comme disponibles, et que la liaison entrante considérée est en fonctionnement, ce qui signifie globalement qu'elle peut être utilisée pour l'acheminement de cellules, quelle que soit la destination de ces cellules en ce qui concerne les groupes de sorties du commutateur élémentaire dont il s'agit. Le signal correspondant constitue donc une autorisation de transfert de cellules pour cette liaison entrante, c'est-à-dire que, dans la mesure où il parvient au commutateur élémentaire de l'étage précédent accèdant au commutateur élémentaire SEsj par cette liaison, il constitue donc aussi une autorisation de transfert de cellules pour la liaison sortante correspondante de ce commutateur élémentaire de l'étage précédent.

Les signaux TAC1 à TACx sont appliqués à des circuits de transmission d'informations d'état sortantes BASTC1 à BASTCx qui convertissent ces signaux en une forme adapatée au mode de transmission de ces signaux sur les liaisons de transmission d'état BASrs1j à BASrsxj associées chacune à une des liaisons entrantes du commutateur élémentaire SEsj.

Les liaisons de transmission d'état peuvent être des liaisons de transmission numérique permanentes et les signaux d'informations d'état auront un caractère continu, aussi bien à l'émission, sur les liaison BASrs1j à BASrsxj du commutateur élémentaire considéré, qu'à la réception, sur les liaisons BASstj1 à BASstjz du commutateur élémentaire considéré. Cela permettra une transmission quasi-instantanée de tout évènement affectant la capacité d'une liaison entrante à acheminer des cellules. En effet, si, par suite de l'absence de la réception du signal d'état entrant de disponibilité - ou d'autorisation de transfert de cellules - un groupe de sorties doit être considéré comme inapte à l'acheminement de cellules dans des conditions satisfaisantes, le dispositif de supervision RGASC supprime le signal ARGA. Aussitôt, les signaux BASrs1j à BASrsxj sont supprimés sur toutes les liaisons de transmission d'état du commutateur SEsj vers l'étage précédent. En effet, bien que le commutateur élémentaire soit éventuellement capable d'écouler des cellules sur d'autres groupes de sortie, il est nécessaire de le déclarer totalement inapte à l'acheminement des cellules, car l'on ne sait pas à l'avance sur quel groupe de sorties une cellule reçue dans le commutateur élémentaire devrait être acheminée. De même, si le signal SMS indique que le commutateur élémentaire n'est plus en état de fonctionnement, les signaux BASrs1j à BASrsxj sont supprimées.

Par contre, les groupes de sorties peuvent être disponibles et le commutateur élémentaire en état de fonctionnement, alors qu'une liaison entrante particulière se révèle hors d'état. Dans ce cas, seul le signal d'état de disponibilité associé à cette liaison entrante est supprimé. Une telle disposition combinée avec le caractère à trajets multiples et à auto-acheminement du réseau de commutation permettra d'éviter qu'un défaut ponctuel ne fasse tache d'huile.

Enfin, il convient de mentionner que les signaux LAV1 à LAVz et ARGA sont transmis à l'extérieur du dispositif de la figure 2, vers une unité de commande du commutateur élémentaire SEsj. Cette unité de commande est aménagée, de façon classique, pour ne pas transmettre de cellules sur une liaison sortante ne donnant pas lieu à la réception d'un signal d'autorisation de transfert de cellules. Ainsi, l'absence d'un des signaux LAV1 à LAVz entraîne des mesures de défense immédiates consistant déjà à modifier les acheminements de manière à ne plus envoyer de cellules sur une liaison sortante qui n'est plus en mesure de permettre leur acheminement. Par ailleurs, l'absence du signal de disponibilité de groupes de sorties ARGA peut déclencher des mesures de maintenance ou de signalisation de faute.

On va maintenant se tourner vers la figure 3 qui représente, à titre d'exemple, un mode de réalisation du dispositif logique de supervision de capacité d'acheminement RGASC de la figure 2.

Comme on l'a déjà indiqué, ce dispositif reçoit les signaux LAV1 à LAVz et fournit normalement le signal ARGA. Il reçoit également des signaux d'une horloge non représentée, illustrés à la figure 4, ainsi que des paramètres d'exploitation qui seront présentés ultérieurement.

Comme le représente la figure 4, l'horloge fournit des signaux t(A) dans des temps élémentaires d'un intervalle de temps A, individuellement identifiés t1, t2..., tk..., tz, dont on verra qu'ils correspondent chacun à une des liaisons sortantes du commutateur élémentaire, puis des signaux t′(B) dans un intervalle de temps B, individuellement identifiés t′1, t′2..., t′j, dont on verra qu'ils correspondent chacun à l'un des groupes de sorties du commutateur élémentaire ; ensuite, ce cycle se renouvelle.

Les signaux t(A) sont appliqués à un compteur de liaisons sortantes LKK. Ce compteur est remis à zéro à chaque cycle de l'horloge par des moyens classiques non représentés.

A chaque signal t(A) il fournit une valeur numérique qui désigne une liaison sortante différente du commutateur élémentaire. Cette valeur numérique LKk est appliquée à un multiplexeur MUXL qui s'oriente en conséquence et couple l'une de ses signaux d'état entrant LAV1 à LAVz à l'entrée inc d'un circuit d'incrémentation INCR.

Dans le même temps élémentaire, la même valeur numérique LKk est utilisée comme adresse pour lire une mémoire de traduction de numéro de liaison en numéro de groupe de sorties LRGTM. Les emplacements de mémoire, notés em1 à emz, de cette mémoire LRGTM correspondent individuellement aux liaisons sortantes du commutateur élémentaire et contiennent chacun le numéro RGi d'un groupe de sorties auquel appartient la liaison sortante. Les numéros de groupes de sorties contenus dans la mémoire LRGTM qui sont des paramètres d'exploitation du réseau de commutation y sont inscrit par une liaison d'initialisation INg, en provenance d'un organe de commande d'exploitation non représenté, considéré comme hors du cadre de la présente invention.

Ainsi, le numéro de groupe de sortie lu dans la mémoire, noté RGI, est transmis à une des deux entrées d'un multiplexeur d'adresses MUXAD. Ce dernier reçoit de l'horloge un signal A, pendant tout l'intervalle de temps A et s'oriente sur son entrée inférieure, de sorte que le numéro RGI sert d'adresse pour lire, toujours dans le même temps élémentaire, une mémoire de supervision de disponibilité de groupes d'acheminement RGASM.

Les emplacements de mémoire, notés er1 à erz, de cette mémoire RGASM correspondent individuellement aux groupes de sorties du commutateur élémentaire et contiennent chacun deux champs de données : un champ MINL contenant une valeur numérique qui est le nombre minimal de liaisons sortantes qui doivent être en état de disponibilité pour que l'on considère que le groupe de sorties est capable de soutenir la charge de trafic de cellules maximale qui lui est attribuée en maintenant des performances satisfaisantes, et un champ NLC servant comme on va le voir tout de suite de compteur de liaisons sortantes en état de disponibilité.

Le contenu du champ NLC est appliqué au circuit d'incrémentation INCR. Si le signal d'information d'état entrant sélectionné par le multiplexeur MUXL et appliqué sur l'entrée inc indique que la liaison considérée est disponible, le circuit d'incrémentation INCR augmente d'une unité le contenu du champ NLC, après quoi la nouvelle valeur obtenue est enregistrée, à la place de la précédente. Les modalités de l'opération d'inscription dans le même emplacement de mémoire (l'adresse étant inchangée) sont simplement évoquées à la figure 3 par la liaison qui joint la sortie du circuit d'incrémentation INCR à une entrée de la mémoire RGASM, par l'intermédiaire d'un multiplexeur MUXA.

Le multiplexeur MUXA est commandé par le signal A. Avant la présence du signal A, c'est-à-dire durant la dernière partie du cycle précédent, il était orienté sur son entrée de droite, sur la figure, et a permis d'enregistrer une valeur nulle (O) dans le champ NLC de tous les emplacements de la mémoire RGASM. A partir du début du cycle en cours, le signal A l'oriente sur son entrée de gauche, sur la figure, de telle sorte qu'il transmette les valeurs incrémentées comme on vient de le décrire.

Il en résulte que, pour chacune des liaisons sortantes considérées successivement dans les temps élémentaires t1 à tz, le numéro du groupe de sorties auquel appartient cette liaison sortante est lu dans la mémoire LRGTM et sert pour lire dans la mémoire RGASM une valeur NLC propre à ce groupe de sorties, initialement nulle et qui est incrémentée si la liaison sortante est disponible. Lorsque toutes les liaisons sortantes du commutateur élémentaire ont ainsi été passées en revue, les champs NLC de la mémoire RGASM contiennent chacun le nombre de liaisons trouvées en état de disponibilité dans l'intervalle de temps A.

Accessoirement, toujours dans l'intervalle de temps A, un compteur de groupes d'acheminement RGK et un bistable de surchage OVL sont réinitialisés.

Dès le début de l'intervalle de temps B, les multiplexeurs MUXAD et MUXA changent d'orientation.

Les signaux t'(B) sont appliqués au compteur de groupes de sorties RGK. Ce compteur a été remis à zéro durant le première partie du cycle en cours, comme indiqué.

A chaque signal t'(B) il fournit une valeur numérique qui désigne un groupe de sorties différent du commutateur élémentaire. Cette valeur numérique RGj est appliquée au multiplexeur MUXAD qui la transmet comme adresse à la mémoire RGASM. L'emplacement de mémoire d'un groupe de sorties est ainsi lu et fournit les contenus des champs MINL et NLC.

Ces deux valeurs, MINL et NLC sont alors appliquées aux deux entrées d'un comparateur COMP lequel fournit un signal de non disponibilité na, si MINL>NLC, à un circuit bistable de surcharge OVL. En réponse, dans un tel cas, le circuit bistable OVL passe en position 1.

Dans le même temps élémentaire, une opérations d'inscription est effectuée à la même adresse. Comme on l'a vu précédemment, elle a pour effet de réinitialiser le champ de comptage NLC du groupe de sorties considéré.

Ainsi, lorsque l'intervalle de temps B se termine, les emplacements de tous les groupes de sorties ont été passés en revue et si l'un quelconque d'entre eux contient une valeur NLC inférieure à la valeur MINL, le bistable OVL est passé en position 1. Cela signifie que, dans l'un quelconque des groupes de sorties, le nombre de liaisons disponibles, compté dans le champ NLC, n'atteint pas le seuil de capacité d'acheminement caractérisé par la valeur enregistrée dans le champ MINL.

Par contre, si, pour tous les groupes de sorties, le nombre de liaisons sortantes disponibles est supérieur ou égal au seuil MINL, le bistable OVL reste en position O.

Au temps élémentaire t1 du cycle de fonctionnement suivant, la position du bistable de surcharge OVL est recopiée, par des portes ET commandées par le signal t1, avec inversion, sur un bistable BARGA. Ce bistable est donc mis en position 1 si tous les groupes de sorties sont capables d'acheminer le trafic de cellules maximal qui leur est attribué. Il fournit alors le signal ARGA.

Tout ce qui vient d'être dit est également généralisable au cas où un signal d'état de disponibilité est associé non pas à une liaison entrante individuelle, mais à un groupe de liaisons entrantes appartenant à une même maille entre commutateurs élémentaires. Ce qui se rapporte à un groupe de liaisons entrantes vaut alors en même temps pour chacune des liaisons entrantes du groupe. De même, à l'autre extrémité de ces liaisons, le signal d'autorisation de transfert de cellules vaudra alors pour toutes les liaisons sortantes d'un groupe de liaisons sortantes.

Par ailleurs, on a mentionné, en relation avec la figure 2, que l'invention s'appliquerait tout aussi bien dans le cas d'un réseau de commutation symétrique. Dans un tel cas, chaque commutateur élémentaire peut avoir à transférer des cellules d'un ensemble d'entrées à un ensemble de sorties, pour un premier sens de transfert, et aussi d'un deuxième ensemble d'entrées à un deuxième ensemble de sorties, le sens de transfert symétrique. Il va de soi que, dans un tels cas, un dispositif semblable à celui des figures 2 et 3 doit être prévu pour chaque sens de transfet de cellules, ces deux dispositifs étant autonomes, mais recevant toutefois la même information d'état actif SMS.

Le dispositif de la figure 3 permet de composer les groupes de sorties du commutateur élémentaire à volonté, par initialisation appropriée de la mémoire LRGTM. Il permet en outre de définir à volonté le nombre de liaisons qui doivent être disponibles pour que le trafic de cellules maximal attendu soit écoulé dans des conditions satisfaisantes, par initialisation du champ MINL des emplacements de la mémoire RGASM (pour simplifier, on n'a mentionné à cette fin que la liaison IN1). Ce nombre peut varier d'un commutateur élémentaire à l'autre dans un même réseau de commutation, selon la configuration du réseau. Pour un même commutateur élémentaire d'un même réseau de commutation, il peut varier au cours du temps (périodes creuses, évolutions dans la configuration du réseau de commutation, etc.). La gestion des paramètres MINL permet de limiter au minimum les effets des défaillances, particulièrement en période de trafic faible.

## Revendications

1. Réseau de commutation à auto-acheminement par cellules et trajets multiples pour la commutation de cellules à multiplexage temporel asynchrone comprenant :
- des ports d'entrée,
- des ports de sortie,
- des commutateurs élémentaires arrangés en plusieurs étages de commutateurs élémentaires interconnectés,
- chaque commutateur élémentaire ayant des entrées et des sorties et étant agencé pour transférer une cellule reçue sur l'une de ses entrées, sur une ou plusieurs de ses sorties, en fonction d'informations d'acheminement associées à ladite cellule,
- les ports d'entrée du réseau correspondant aux entrées des commutateurs élémentaires d'un premier étage et les ports de sortie du réseau correspondant aux sorties des commutateurs élémentaires d'un dernier étage,
ce réseau étant par ailleurs tel que
- chaque commutateur élémentaire d'un étage au moins du réseau possède au moins trois sorties,
- ces sorties sont arrangées en groupes de sorties,
- un groupe de sorties comprend une ou plusieurs sorties déterminées,
- en fonction de données d'acheminement associées à une cellule reçue sur l'une quelconque de ses entrées, ce commutateur élémentaire est agencé pour identifier un ensemble comprenant un ou plusieurs desdits groupes de sorties,
- ce commutateur élémentaire est agencé pour transférer ladite cellule reçue, sur une sortie, sélectionnée parmi les sorties du groupe unique dudit ensemble, ou des sorties, une par groupe dudit ensemble, chacune sélectionnée parmi les sorties du groupe auquel elle appartient,
caractérisé en ce que
- chaque commutateur élémentaire (SEsj, par exemple) d'un étage au moins (STs), dit étage considéré, du réseau de commutation comprend des moyens d'établissement d'état (RGASC, ET1, ETE1, ETEx) définissant un état de disponibilité du commutateur élémentaire dans lequel ce commutateur élémentaire est disponible pour l'acheminement du trafic de cellules,
- chaque commutateur élémentaire (SEsj) dudit étage considéré comprend des moyens de transmission d'état (BASTC1, BASTCx) associés aux liaisons entrantes connectant ce commutateur élémentaire à des commutateurs élémentaires de l'étage précédent et transmettant une information d'état de disponibilité (BASrs1j, BASrsxj) à ces commutateurs élémentaires lorsque le commutateur élémentaire considéré est dans ledit état de disponibilité,
- chaque commutateur élémentaire dudit étage précédent (SERi, par exemple) comprend des moyens de réception d'informations d'état (BASRC1, BASRCz) associés aux liaisons sortantes connectant ce commutateur élémentaire à des commutateurs élémentaires dudit étage considéré et recevant une information d'état de disponibilité de ces commutateurs élémentaires pour chacune de ses sorties, lorsque celle-ci conduit à un commutateur élémentaire dans ledit état de disponibilité, et
- chacun des commutateurs dudit étage précédent comprend des moyens de défense intervenant dans les décisions d'acheminement des cellules en interdisant leur accès à toute sortie dont la liaison sortante ne donne pas lieu à la réception d'une information d'état de disponibilité.

2. Réseau de commutation conforme à la revendication 1, caractérisé en ce que lesdits moyens de transmission d'état (BASTC1, BASTCx) permettent une transmission permanente ou quasi-permanente d'un signal (BASrs1j, BASrsxj) représentant ladite information d'état de disponibilité.

3. Réseau de commutation conforme à la revendication 1 ou 2, caractérisé en ce que, après interdiction de l'acheminement de cellules vers un commutateur élémentaire dudit étage considéré, l'acheminement des cellules vers ce commutateur élémentaire reprend dès que l'information d'état qu'il fournit indique qu'il est redevenu disponible.

4. Réseau de commutation conforme à la revendication 1, 2 ou 3, caractérisé en ce que l'établissement de l'état d'un commutateur élémentaire dudit étage précédent par lesdits moyens d'état s'effectue en prenant en considération, outre l'état opératoire du commutateur élémentaire lui-même (SMS), les informations d'état qu'il reçoit de commutateurs élémentaires dudit étage considéré, évaluées par groupes de sorties, au moyen d'un circuit de supervision de disponibilité de groupe de sorties (RGASC), qui vérifie si la capacité d'acheminement de chaque groupe de sorties est suffisante par rapport à un seuil de capacité d'acheminement.

5. Réseau de commutation conforme à la revendication 4, caractérisé en ce que ledit seuil est ajustable par commande externe au commutateur élémentaire.

6. Réseau de commutation conforme à la revendication 4 ou 5, caractérisé en ce que ledit seuil spécifie, pour chaque groupe de sorties, un nombre minimal de sorties disponibles.

7. Réseau de commutation conforme à la revendication 4, 5 ou 6, caractérisé en ce que la composition des groupes de sorties est fournie audit circuit de disponibilité de groupe de sorties (RGASC) par une commande externe.

8. Réseau de commutation conforme à l'une quelconque des revendications 1 à 7, caractérisé en ce que lesdits moyens de transmission d'état associés aux liaisons entrantes comprennent une liaison de transmission d'état individuelle (BASrs1j, BASrsxj) par liaison entrante.

9. Réseau de commutation conforme à l'une quelconque des revendications 1 à 7, caractérisé en ce que lesdits moyens de transmission d'état associés aux liaisons entrantes comprennent une liaison de transmission d'état individuelle pour un groupe de liaisons entrantes appartenant à une même maille entre commutateurs élémentaires.

10. Réseau de commutation conforme à la revendication 8, caractérisé en ce que chaque commutateur élémentaire (SEj) dudit étage considéré combine l'information d'état de fonctionnement de chaque liaison entrante (ILS1, ILS2) avec l'état de disponibilité (SMS, ARGA) du commutateur élémentaire considéré, afin de transmettre sur ladite liaison de transmission d'état individuelle une information d'autorisation de transfert de cellules sur la liaison considérée lorsque celle-ci est en état de fonctionnement et que le commutateur élémentaire considéré est disponible.

11. Réseau de commutation conforme à la revendication 9, caractérisé en ce que chaque commutateur élémentaire dudit étage considéré (SEj) combine l'information d'état de fonctionnement de chaque groupe de liaisons entrantes (ILS1, ILSx) appartenant à une même maille entre commutateurs élémentaires avec l'état de disponibilité (SMS, ARGA) du commutateur élémentaire considéré, afin de transmettre sur ladite liaison de transmission d'état individuelle une information d'autorisation de transfert de cellules sur les liaisons considérées lorsque celles-ci sont en état de fonctionnement et que le commutateur élémentaire considéré est disponible.

12. Réseau de commutation conforme à l'une quelconque des revendications 1 à 11, caractérisé en ce que, lorsque le transfert de cellules n'est pas autorisé, ladite information d'état peut fournir d'autres états que l'état de non disponibilité, et alors transporter, par exemple, des informations de test ou de commande.

13. Réseau de commutation conforme à l'une quelconque des revendications 1 à 12, caractérisé en ce que lesdits moyens de transmission d'état associés aux liaisons ou groupes de liaisons entrantes comprennent une liaison de transmission numérique spécifique, prévue à cet effet.

14. Réseau de commutation conforme a l'une quelconque des revendications 1 à 12, caractérisé en ce que, dans le cas où le réseau de commutation est symétrique et où deux commutateurs d'étages adjacents sont raccordés par deux liaisons symétriques, une pour chaque direction de transfert de cellules, lesdits moyens de transmission d'état associés aux liaisons entrantes comprennent la transmission d'information d'état dans des cellules acheminées sur les liaisons symétriques de celles-ci.

15. Réseau de commutation conforme a l'une quelconque des revendications précédentes, caractérisé en ce qu'une partie au moins des commutateurs élémentaires sont des modules de commutation réalisés à l'aide de petits commutateurs élémentaires de telle sorte qu'ils constituent un ensemble équivalent à un commutateur élémentaire de plus grosse capacité, en ce que lesdits groupes de sortie sont définis comme des groupes d'acheminement du module de commutation et en ce que les moyens utilisés pour le traitement desdites informations d'état sont centralisés au niveau du module de commutation pour recevoir et transmettre lesdites informations d'état appropriées de et vers les étages adjacents.

## Patentansprüche

1. Vermittlungsnetz mit automatischer Leitwegbestimmung für jede Zelle und mit Mehrfachleitwegen für die Durchschaltung von Zellen im asynchronen Zeitmultiplexmodus,
- mit Eingangsports,
- mit Ausgangsports,
- mit Elementarschaltern, die in mehreren miteinander verbundenen Elementarschalterstufen angeordnet sind,
wobei jeder Elementarschalter Eingänge und Ausgänge besitzt und zur Übertragung einer an einem seiner Eingänge empfangenen Zelle auf einen oder mehrere seiner Ausgänge abhängig von der Zelle zugeordneten Leitweginformationen ausgebildet ist,
wobei die Eingangsports des Netzes den Eingängen der Elementarschalter einer ersten Stufe und die Ausgangsports des Netzes den Ausgängen der Elementarschalter einer letzten Stufe entsprechen,
wobei das Netz weiter so gestaltet ist, daß:
- jeder Elementarschalter mindestens einer Stufe des Netzes mindestens drei Ausgänge hat,
- diese Ausgänge in Gruppen von Ausgängen gruppiert sind,
- eine Gruppe von Ausgängen einen oder mehrere bestimmte Ausgänge besitzt,
- abhängig von den auf einem beliebigen seiner Eingänge empfangenen Zellen zugeordneten Leitweginformationen dieser Elementarschalter eine Einheit identifizieren kann, die eine oder mehrere Gruppen von Ausgängen enthält,
- der Elementarschalter die empfangene Zelle auf einen einzigen unter den Ausgängen der Gruppe der Einheit oder auf mehrere Ausgänge überträgt, und zwar einen Ausgang je Gruppe der Einheit, der unter den Ausgängen der Gruppe ausgewählt wird, zu der er gehört,
dadurch gekennzeichnet, daß
- jeder Elementarschalter (zum Beispiel SEsj) mindestens einer Stufe (STs) des Vermittlungsnetzes Mittel zur Bildung eines Zustands (RGASC, ET1, ETE1, ETEz) aufweist, die einen Verfügbarkeitszustand des Elementarschalters definieren, in dem dieser Elementarschalter für die Abwicklung des Zellenverkehrs verfügbar ist,
- jeder Elementarschalter (SEsj) der betrachteten Stufe Mittel (BASTC1, BASTCz) zur Übertragung des Zustands aufweist, die den diesen Elementarschalter an Elementarschalter der vorhergehenden Stufe anschließenden ankommenden Verbindungen zugeordnet sind und eine Information über den Verfügbarkeitszustand (BASrs1j, BASrsxj) an diese Elementarschalter übertragen, wenn der betrachtete Elementarschalter verfügbar ist,
- jeder Elementarschalter der vorhergehenden Stufe (zum Beispiel SERi) Mittel zum Empfang von Zustandsinformationen (BASRC1, BASRCz) aufweist, die den diesen Elementarschalter mit Elementarschaltern der betrachteten Stufe verbindenden ausgehenden Verbindungen zugeordnet sind, und eine Information über den Verfügbarkeitszustand dieser Elementarschalter für jeden ihrer Ausgänge empfangen, wenn dieser zu einem verfügbaren Elementarschalter führt.
- und jeder der Schalter der vorhergehenden Stufe Störschutzmittel aufweist, die bei den Entscheidungen über den Leitweg der Zellen wirksam werden und deren Zugang zu einem Ausgang verhindern, für dessen ausgehende Verbindung keine Verfügbarkeitsinformation empfangen wird.

2. Vermittlungsnetz nach Anspruch 1, dadurch gekennzeichnet, daß die Mittel zur Übertragung des Verfügbarkeitszustands (BASTC1, BASTCx) eine permanente oder quasi-permanente Übertragung eines Signals (BASrs1j, BASrsxj) erlauben, das die Verfügbarkeitsinformation darstellt.

3. Vermittlungsnetz nach Anspruch 1 oder 2, dadurch gekennzeichnet, daß nach der Untersagung der Weiterschaltung vom Zellen zu einem Elementarschalter der betrachteten Stufe die Weiterschaltung der Zellen zu diesem Elementarschalter wieder aufgenommen wird, sobald die von ihm gelieferte Zustandsinformation angibt, daß er wieder verfügbar ist.

4. Vermittlungsnetz nach Anspruch 1, 2 oder 3, dadurch gekennzeichnet, daß der Aufbau des Verfügbarkeitszustands eines Elementarschalters der vorhergehenden Stufe durch die Zustandsmittel unter Berücksichtigung des Betriebszustands des Elementarschalters selbst (SMS) und der Zustandsinformationen erfolgt, die er von Elementarschaltern der betrachteten Stufe empfängt und die in Gruppen von Ausgängen zusammengefaßt sind, mit Hilfe einer Verfügbarkeits-Überwachungsschaltung von Gruppen von Ausgängen (RGASC), die überprüft, ob die Übertragungskapazität jeder Gruppe von Ausgängen bezüglich einer Kapazitätsschwelle ausreicht.

5. Vermittlungsnetz nach Anspruch 4, dadurch gekennzeichnet, daß die Schwelle durch Steuerung von außerhalb des Elementarschalters einstellbar ist.

6. Vermittlungsnetz nach Anspruch 4 oder 5, dadurch gekennzeichnet, daß die Schwelle für jede Gruppe von Ausgängen eine Mindestzahl von verfügbaren Ausgängen spezifiziert.

7. Vermittlungsnetz nach Anspruch 4, 5 oder 6, dadurch gekennzeichnet, daß die Zusammensetzung der Gruppen von Ausgängen der Schaltung zur Überwachung der Verfügbarkeit der Gruppe von Ausgängen (RGASC) durch eine äußere Steuerung übermittelt wird.

8. Vermittlungsnetz nach einem beliebigen der Ansprüche 1 bis 7, dadurch gekennzeichnet, daß die Mittel zur Übertragung des Verfügbarkeitszustands, die den eingehenden Verbindungen zugeordnet sind, eine individuelle Verbindung (BASrs1j, BASrsxj) zur Übertragung des Verfügbarkeitszustands je eingehende Verbindung enthalten.

9. Vermittlungsnetz nach einem beliebigen der Ansprüche 1 bis 7, dadurch gekennzeichnet, daß die Mittel zur Übertragung des Verfügbarkeitszustands, die den eingehenden Verbindungen zugeordnet sind, eine Verbindung zur Übertragung des individuellen Verfügbarkeitszustands je Gruppe von eingehenden Verbindungen enthalten, die einer gemeinsamen Masche zwischen Elementarschaltern angehören.

10. Vermittlungsnetz nach Anspruch 8, dadurch gekennzeichnet, daß jeder Elementarschalter (SEj) der betrachteten Stufe die Information über den Betriebszustand jeder eingehenden Verbindung (ILS1, ILSz) mit dem Verfügbarkeitszustand (SMS, ARGA) des betrachteten Elementarschalters kombiniert, um auf der individuellen Zustandsübertragungsverbindung eine Information zur Freigabe der Übertragung von Zellen auf der betrachteten Verbindung zu übermitteln, wenn diese sich im Betriebszustand befindet und der Elementarschalter als verfügbar betrachtet wird.

11. Vermittlungsnetz nach Anspruch 9, dadurch gekennzeichnet, daß jeder Elementarschalter (SEj) der betrachteten Stufe die Information über den Betriebszustand jeder Gruppe von eingehenden Verbindungen (ILS1, ILSz), die einer gemeinsamen Masche zwischen Elementarschaltern zugehören, mit dem Verfügbarkeitszustand (SMS, ARGA) des betrachteten Elementarschalters kombiniert, um auf der individuellen Zustandsübertragungsverbindung eine Information zur Freigabe der Übertragung von Zellen auf den betrachteten Verbindungen zu übermitteln, wenn diese sich im Betriebszustand befinden und der Elementarschalter als verfügbar betrachtet wird.

12. Vermittlungsnetz nach einem beliebigen der Ansprüche 1 bis 11, dadurch gekennzeichnet, daß die Zustandsinformation, wenn die Übertragung von Zellen nicht freigegeben ist, andere Zustände als den Zustand der Nichtverfügbarkeit liefern kann, beispielsweise Testinformationen oder Steuerinformationen.

13. Vermittlungsnetz nach einem beliebigen der Ansprüche 1 bis 12, dadurch gekennzeichnet, daß die den Verbindungen oder Gruppen von eingehenden Verbindungen zugeordneten Zustandsübertragungsmittel eine spezifisch hierfür vorgesehene digitale Übertragungsverbindung enthalten.

14. Vermittlungsnetz nach einem beliebigen der Ansprüche 1 bis 12, dadurch gekennzeichnet, daß für den Fall, daß das Vermittlungsnetz symmetrisch ist und daß zwei Schalter benachbarte Stufen über zwei symmetrische Verbindungen je für eine Übertragungsrichtung der Zellen miteinander verbunden sind, die den eingehenden Verbindungen zugeordneten Zustandsübertragungsmittel die Zustandsinformation in Zellen übertragen, die auf den symmetrischen Verbindungen übertragen werden.

15. Vermittlungsnetz nach einem beliebigen der vorhergehenden Ansprüche, dadurch gekennzeichnet, daß mindestens ein Teil der Elementarschalter als Schaltmoduln ausgebildet ist, die mit Hilfe kleiner Elementarschalter so realisiert sind, daß sie eine einem Elementarschalter größerer Kapazität entsprechende Gruppe bilden, daß die Gruppen von Ausgängen als Ausgangsgruppen des Schaltmoduls definiert sind und daß die für die Bearbeitung der Zustandsinformationen verwendeten Mittel in Höhe des Schaltmoduls zentralisiert sind, um die geeigneten Zustandsinformationen von den benachbarten Stufen zu empfangen und an diese zu übermitteln.

## Claims

1. Packet-oriented multiple path self-routing switching network for switching asynchronous time-division multiplexed packets, comprising:
- input ports,
- output ports,
- switch units arranged in multiple stages of interconnected switch units,
- each switch unit having inputs and outputs and being adapted to transfer a packet received on one of its inputs to one or more of its outputs on the basis of routing information associated with said packet,
- the input ports of the network representing inputs of switch units of a first stage and output ports of the network representing outputs of switch units of a final stage,
the network being such that
- each switch unit of at least one stage of the network has at least three outputs,
- said outputs are arranged in groups of outputs,
- a group of outputs comprises one or more specific outputs,
- on the basis of routing data associated with a packet received on any of its inputs, said switch unit is adapted to identify a set comprising one or more of said groups of outputs,
- said switch unit is adapted to transfer said received packet to an output selected from the outputs of the single group of said set or to outputs, one per group of said set, each selected from the outputs of the group to which it belongs,
characterised in that
- each switch unit (SEsj, for example) of at least one stage (STs), referred to hereinafter as the stage in question, of the switching network comprises status defining means (RGASC, ET1, ETE1, ETEx) defining an available state of the switch unit in which the switch unit is available for routing packet traffic,
- each switch unit (SEsj) of said stage in question comprises status transmission means (BASTC1, BASTCx) associated with the incoming links connecting said switch unit to switch units of the preceding stage and transmitting availability status information (BASrs1j, BASrsxj) to said switch units when the switch unit in question is in said available state,
- each switch unit of said preceding stage (SERi, for example) comprises means (BASRC1, BASRCz) for receiving status information associated with the outgoing links connecting said switch unit to switch units of said stage in question and receiving availability status information from said switch units for each of its outputs, if the latter leads to a switch unit in said available state, and
- each of the switches of said preceding stage comprises defense means contributing to packet routing decisions by prohibiting their access to any output for which the outgoing link does not cause available status information to be received.

2. Switching network according to claim 1, characterised in that said status transmission means (BASTC1, BASTCx) enable continuous or virtually continuous transmission of a signal (BASrs1j, BASrsxj) representing said availability status information.

3. Switching network according to claim 1 or claim 2, characterised in that, following prohibition of routing of packets to a switch unit of said stage in question, the routing of packets to said switch unit resumes immediately the status information that it provides indicates that it is available again.

4. Switching network according to claim 1 or claim 2 or claim 3, characterised in that the status of a switch unit of said preceding stage is established by said status defining means by taking into consideration, in addition to the operational status of the switch unit itself (SMS), the status information that it receives from switch units of said stage in question, evaluated with reference to groups of outputs, by means of an output group availability supervision circuit (RGASC) which verifies if the routing capacity of each group of outputs is sufficient with reference to a routing capacity threshold.

5. Switching network according to claim 4, characterised in that said threshold is variable by a command external to the switch unit.

6. Switching network according to claim 4 or claim 5, characterised in that said threshold specifies, for each group of outputs, a minimum number of available outputs.

7. Switching network according to claim 4 or claim 5 or claim 6, characterised in that the composition of the groups of outputs is indicated to said output group availability circuit (RGASC) by an external command.

8. Switching network according to any one of claims 1 through 7, characterised in that said status transmission means associated with the incoming links comprise an individual status transmission link (BASrs1j, BASrsxj) for each incoming link.

9. Switching network according to any one of claims 1 through 7, characterised in that said status transmission means associated with the incoming links comprise an individual status transmission link for a group of incoming links belonging to the same internal link between switch units.

10. Switching network according to claim 8, characterised in that each switch unit (SEj) of said stage in question combines the operating status information on each incoming link (ILS1, ILSx) with the availability status (SMS, ARGA) of the switch unit in question in order to transmit on said individual status transmission link information authorising transfer of packets on the link in question when the latter is operational and the switch unit in question is available.

11. Switching network according to claim 9, characterised in that each switch unit of said stage in question (SEj) combines the operating status information on each group of incoming links (ILS1, ILSx) belonging to the same internal link between switch units with the availability status (SMS, ARGA) of the switch unit in question in order to transmit on said individual status transmission link information authorising transfer of packets on the links in question when the latter are operational and the switch unit in question is available.

12. Switching network according to any one of claims 1 through 11, characterised in that, if the transfer of packets is not authorised, said status information can indicate a status other than the non-available status and then convey, for example, test or command information.

13. Switching network according to any one of claims 1 to 12, characterised in that said status transmission means associated with the incoming links or groups of incoming links comprise a dedicated digital transmission link provided for this purpose.

14. Switching network according to any one of claims 1 through 12, characterised in that, if the switching network is symmetrical and two switches of adjacent stages are connected by two symmetrical links, one for each packet transfer direction, said status transmission means associated with the incoming links comprise the transmission of status information in the packets routed on the symmetrical links of the latter.

15. Switching network according to any one of the preceding claims, characterised in that at least some of the switch units are switching modules constructed from switch units such that they constitute an assembly equivalent to a larger capacity switch unit, in that said output groups are defined as routing groups of the switching module and in that the means employed to process said status information are centralised at the switching module to receive and transmit said appropriate status information to and from the adjacent stages.
